(19) **Europäisches Patentamt / European Patent Office / Office européen des brevets**

(11) **EP 3 946 971 B1**

(12) **FASCICULE DE BREVET EUROPEEN**

(45) Date de publication et mention de la délivrance du brevet:
**03.05.2023 Bulletin 2023/18**

(21) Numéro de dépôt: **20716713.1**

(22) Date de dépôt: **24.03.2020**

(51) Classification Internationale des Brevets (IPC):
**B60C 9/00** *(2006.01)*    **B60C 9/20** *(2006.01)*
**B60C 9/22** *(2006.01)*    **B60C 9/02** *(2006.01)*

(52) Classification Coopérative des Brevets (CPC):
**B60C 9/22; B60C 9/0007;** B60C 2009/0071;
B60C 2009/0269; B60C 2009/2012;
B60C 2009/2016; B60C 2009/2019; B60C 2200/06

(86) Numéro de dépôt international:
**PCT/EP2020/058187**

(87) Numéro de publication internationale:
**WO 2020/200925 (08.10.2020 Gazette 2020/41)**

(54) **ARMATURE DE SOMMET DE PNEUMATIQUE CONSTITUEE DE DEUX COUCHES DE SOMMET DE TRAVAIL ET D'UNE COUCHE D'ELEMENTS DE RENFORCEMENT CIRCONFERENTIELS**

AUS ZWEI ARBEITENDEN GÜRTELSCHICHTEN UND EINER SCHICHT AUS UMLAUFENDEN VERSTÄRKUNGSELEMENTEN ZUSAMMENGESETZTE REIFENGÜRTELVERSTÄRKUNG

TYRE CROWN REINFORCEMENT MADE UP OF TWO WORKING CROWN LAYERS AND A LAYER OF CIRCUMFERENTIAL REINFORCING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2019 FR 1903322**

(43) Date de publication de la demande:
**09.02.2022 Bulletin 2022/06**

(73) Titulaire: **COMPAGNIE GENERALE DES ETABLISSEMENTS MICHELIN**
**63000 Clermont-Ferrand (FR)**

(72) Inventeurs:
• **FOURNIER, Orel**
**63040 CLERMONT-FERRAND Cedex 9 (FR)**
• **NOEL, Sebastien**
**63040 CLERMONT-FERRAND Cedex 9 (FR)**

(74) Mandataire: **Le Cam, Stéphane Georges Elie Manufacture Française des Pneumatiques Michelin**
**DCJ/PI - F35 - Ladoux**
**23, place des Carmes-Déchaux**
**63040 Clermont-Ferrand Cedex 9 (FR)**

(56) Documents cités:
WO-A1-2011/067206    WO-A1-2017/149223
WO-A1-2019/016459    WO-A1-2019/048762
DE-A1-102010 000 471

**Description**

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques faisant avec la direction circonférentielle un angle compris entre 45° et 90°, cette nappe, dite de triangulation, étant radialement située entre l'armature de carcasse et la première nappe de sommet dite de travail, formée de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Par ailleurs, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance.

Il est encore connu de l'homme du métier d'augmenter le nombre de nappes constituant l'armature sommet pour améliorer l'endurance du pneumatique à l'égard de tels chocs.

Quelles que soient l'une de ces solutions telles que présentées précédemment, la présence d'une ou plusieurs couches d'éléments de renforcement supplémentaire conduit à une masse plus importante du pneumatique et à des coûts de fabrication des pneumatiques plus importants.

Il est encore connu du document WO 2017/149223 un pneumatique dont l'armature sommet est allégée en améliorant les propriétés d'endurance du pneumatique à l'égard de tels chocs. Les inventeurs ont toutefois mis en évidence que lors de roulage sur des sols extrêmement sollicitant pour les pneumatiques, les performances en termes d'endurance de tels pneumatiques pouvaient être dégradées, par exemple dans des conditions de roulage, combinant la vitesse du véhicule, la charge portée par le pneumatique et la nature du sol, particulièrement agressives. Il est en effet possible d'observer une dégradation des performances en termes d'endurance par exemple lors de roulage à vitesse relativement élevée sur des sols de type approche chantier très agressifs pour le pneumatique. Un ralentissement du véhicule pourrait limiter les risques de dégradation des performances d'endurance mais reste à l'appréciation du conducteur et au détriment de la productivité du véhicule.

Un but de l'invention est de fournir des pneumatiques pour véhicules "Poids-Lourds", par exemple de type « approche chantier », dont les performances d'endurance sont encore améliorées au regard des chocs subis sur la bande de roulement et dont la masse globale est limitée quelle que soit la nature du sol et les conditions de roulage.

Ce but est atteint selon l'invention par un pneumatique pour véhicule de type poids lourd, destiné à être monté sur une jante creuse de type 15° drop centre, à armature de carcasse radiale, constituée d'au moins une couche d'éléments de renforcement, ledit pneumatique comprenant une armature de sommet comprenant deux couches de sommet de travail d'éléments de renforcement croisés d'une couche à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels, l'armature de sommet étant coiffée radialement d'une bande de roulement, ladite bande de roulement étant réunie à deux bourrelets par l'intermédiaire de deux flancs, lesdites deux couches de sommet de travail et ladite au moins une couche d'éléments de renforcement circonférentiels étant seules présentes pour constituer l'armature de sommet sur au moins 40% de la largeur axiale de l'armature sommet, les éléments de renforcement de la couche de travail radialement la plus extérieure formant un angle $\alpha$2 avec la direction circonférentielle supérieur en valeur absolue à l'angle $\alpha$1 formé par les éléments de renforcement de la couche de travail radialement la plus intérieure avec la direction circonférentielle, la valeur absolue de la différence entre les valeurs absolues des angles $\alpha$2 et $\alpha$1 étant supérieure à 7°, l'angle moyen $\alpha$ satisfaisant la relation :

$$28+110*\exp(-L/100) < \alpha < 32+110*\exp(-L/100),$$

$\alpha$ étant défini par la relation $\text{Arctan}((\tan(|\alpha1|)*\tan(|\alpha2|))^{1/2})$, L étant la largeur maximum du pneumatique mesurée selon la direction axiale et exprimée en mm, et les éléments de renforcement métalliques de ladite au moins une couche d'armature de carcasse étant des câbles, de préférence non frettés, présentant au test dit de perméabilité un débit inférieur à 20 cm$^3$/min, un mélange caoutchouteux étant présent au moins localement au sein de la structure du desdits câbles.

Au sens de l'invention, une jante creuse de type 15° drop center ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

La largeur L est mesurée sur un pneumatique monté sur sa jante nominale et gonflé à sa pression nominale, et est exprimée en millimètres.

Les angles $\alpha$1 et $\alpha$2, exprimés en degré, sont mesurés sur une coupe du pneumatique. Les mesures d'angles sont selon l'invention réalisées au niveau du plan médian circonférentiel.

Avantageusement l'angle $\alpha$1 de la couche de travail radialement la plus intérieure est inférieur à 20° pour assurer une meilleure transition avec la couche d'éléments de renforcement circonférentiels.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit. Selon l'invention, la partie du câble testée est située dans la zone du sommet du pneumatique, c'est-à-dire la partie du câble de l'armature carcasse qui se situe proche de la bande de roulement.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm$^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm$^3$/min, les valeurs mesurées inférieures ou égales à 0,2 cm$^3$/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Avantageusement encore, le pneumatique selon l'invention est destiné à être gonflé à une pression de gonflage P supérieure ou égale à 6.5 bar.

De préférence selon l'invention, ladite au moins une couche d'éléments de renforcement circonférentiels est continue axialement et de préférence encore centrée sur le plan médian circonférentiel.

De préférence selon l'invention, les éléments de renforcement desdites deux couches de sommet de travail sont métalliques.

Les résultats obtenus avec des pneumatiques conformes à l'invention ont effectivement mis en évidence que les performances en termes d'endurance peuvent être améliorées notamment lors de roulage sur sol caillouteux, l'armature sommet du pneumatique étant allégée. L'allègement de l'armature sommet du pneumatique s'accompagne d'une simplification de fabrication et d'une diminution des coûts de fabrication.

Contre toute attente, les résultats ont effectivement mis en évidence que les pneumatiques selon l'invention peuvent être allégés en diminuant le nombre de couches constitutives de l'armature sommet tout en conservant voire améliorant les propriétés d'endurance du sommet du pneumatique notamment à l'égard de chocs apparaissant sur la bande de roulement quelle que soit la nature du sol et les conditions de roulage.

Il est en effet connu de l'homme du métier que pour améliorer les performances d'endurance de l'armature sommet d'un pneumatique à l'égard de ce type de chocs, il est usuel d'augmenter le nombre de couches d'éléments de renforcement.

Les inventeurs pensent interpréter ces résultats du fait de l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure. Ils ont constaté que cet angle plus petit semble entraîner un retard dans la prise de tension par les éléments de renforcement lors d'un tel choc. Usuellement, lors de chocs comparables à ceux observés lors d'un roulage sur sol caillouteux la rupture d'éléments de renforcement si elle intervient s'observe sur la couche radialement la plus intérieure. Ces constats semblent indiquer que face à ce type d'agressions, la différence d'angles des éléments de renforcement entre les deux couches de sommet de travail permet d'améliorer les performances d'endurance du pneumatique tout en diminuant le nombre de couches de l'armature de sommet.

La valeur de l'angle moyen α augmentée par rapport à des valeurs plus usuelles connues de pneumatiques usuels pour ce type d'application améliore encore les propriétés d'endurance du sommet du pneumatique à l'égard de chocs apparaissant sur la bande de roulement. La présence de ladite au moins une couche d'éléments de renforcement circonférentiels autorise un angle moyen α des éléments de renforcements des deux couches de sommet de travail supérieur à l'angle moyen défini par les éléments de renforcements des deux couches de sommet de travail dans les pneumatiques plus usuels. En effet, la rigidité circonférentielle apporté par la présence de ladite au moins une couche d'éléments de renforcement circonférentiels permet d'augmenter les angles formés par les éléments de renforcement de chacune des couches de sommet de travail avec la direction circonférentielle, lesdits angles semblant ainsi favoriser le fonctionnement du pneumatique et notamment sa manoeuvrabilité lors de roulages sous fortes charges ou bien avec un angle formé avec la direction d'avancement très important. Les inventeurs ont ainsi su mettre en évidence que les propriétés dynamiques du pneumatique, notamment la rigidité de dérive, sont conservées voire améliorées quel que soit l'usage.

De telles valeurs de l'angle moyen α ne sont toutefois habituellement pas utilisées pour ce type d'applications au risque de nuire aux propriétés d'endurance de la couche d'armature de carcasse dont les éléments de renforcement seraient soumis à des contraintes de compression trop importantes.

Les inventeurs ont toutefois su mettre en évidence que les éléments de renforcement de la couche d'armature de carcasse selon l'invention, qui présentent au test dit de perméabilité un débit inférieur à 20 $cm^3$/min, confèrent du fait de la présence du mélange caoutchouteux au sein des éléments de renforcement un comportement en compression qui autorise un angle moyen α conforme à l'invention.

Avantageusement selon l'invention, le ratio d'utilisation du potentiel de rupture F2/FR2 de la couche de travail radialement la plus extérieure étant inférieur à 1/6, dans lequel :

FR2 est la force rupture en extension uniaxiale des câbles de la couche de travail radialement la plus extérieure,

$$F2 = p_2 * Tc * [(\tan(|\alpha 1|)/(\tan(|\alpha 1|)+\tan(|\alpha 2|))) / \cos^2(|\alpha 2|) + C_F],$$

avec

$$Tc = 0.092 * P * Rs * (1-(Rs^2-R_L^2)/(2*Rt*Rs)),$$

P : la pression de gonflage du pneumatique,

$$C_F = 0.00035*(\min((L-80) / \sin(|\alpha 1|), (L-80) / \sin(|\alpha 2|), 480)-480),$$

$p_2$ : le pas de pose des éléments de renforcement de la couche de sommet de travail radialement la plus extérieure, mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus intérieure,

$R_L$ : moyenne des rayons des points axialement les plus à l'extérieur de la partie principale de la couche d'armature de carcasse de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur axiale de la bande de roulement.

L'épaisseur Es et le pas $p_2$ sont mesurés sur une coupe du pneumatique et sont exprimés en millimètres.

Les inventeurs font encore le constat que le choix de la valeur absolue de la différence entre les valeurs absolues des angles précités α1 et α2 associé à l'angle moyen α, au ratio d'utilisation du potentiel de rupture F2/FR2 et à la présence d'une couche d'éléments de renforcement circonférentiels tels que définis selon cette réalisation avantageuse de l'invention peuvent permettre d'éliminer la couche de protection usuellement mise en place radialement à l'extérieur des autres couches de l'armature de sommet. Une telle couche est habituellement présente pour être sacrifiée en cas d'agressions du pneumatique de type coupures pouvant venir altérer l'intégrité d'éléments de renforcement métalliques par des phénomènes de corrosion associés à la fatigue desdits éléments de renforcement. Les inventeurs font effectivement le constat que les éléments de renforcement de la couche de sommet de travail radialement la plus extérieure, d'un pneumatique selon l'invention, sont moins sollicités lors du gonflage du pneumatique ou bien lors de son utilisation en roulage normal que les éléments de renforcement d'une couche de sommet de travail radialement la plus extérieure d'un pneumatique plus usuel ; un tel pneumatique plus usuel présente des différences d'angles en valeur absolue entre les éléments de renforcement des différentes couches de travail plus petites, un angle des éléments de renforcement de la couche de travail radialement la plus intérieure supérieur ou égal en valeur absolue à celui des éléments de renforcement de la couche de travail radialement la plus extérieure et un ratio d'utilisation du potentiel de rupture F2/FR2 plus important. Les éléments de renforcement de la couche de sommet de travail radialement la plus extérieure d'un pneumatique selon l'invention présentent ainsi des propriétés d'endurance bien supérieures à ceux d'un pneumatique plus usuel, notamment du fait de l'angle des éléments de renforcement de la couche de travail radialement la plus extérieure particulièrement élevé et de la présence de ladite au moins une couche d'éléments de renforcement circonférentiels ; les inventeurs font ainsi le constat que la suppression de la couche de protection est rendue possible et permet de contribuer à l'allègement du pneumatique.

Selon un mode de réalisation préféré de l'invention, la valeur absolue de la différence entre les valeurs absolues des angles $\alpha2$ et $\alpha1$ est supérieure ou égale à 10° et de préférence supérieure à 14°. Selon ce mode de réalisation, et conformément aux interprétations données ci-dessus, il va être possible d'améliorer encore les performances d'endurance des éléments de renforcement de la couche de travail radialement la plus extérieure et/ou améliorer encore les performances du pneumatique à l'égard de chocs tels que ceux subis lors de roulage sur des sols caillouteux.

De préférence, la valeur absolue de la différence entre les valeurs absolues des angles $\alpha2$ et $\alpha1$ est inférieure à 25° et de préférence encore inférieure à 20°. Au-delà de ces valeurs, le pneumatique serait susceptible de présenter des usures irrégulières dans certaines conditions d'utilisation.

Avantageusement encore selon l'invention, le ratio d'utilisation du potentiel de rupture F2/FR2 de la couche de travail radialement la plus extérieure est inférieur à 1/8. Un tel ratio d'utilisation du potentiel de rupture F2/FR2 contribue encore à améliorer les performances d'endurance des éléments de renforcement de la couche de travail radialement la plus extérieure lors de l'utilisation du pneumatique.

De préférence selon l'invention, le ratio d'utilisation du potentiel de rupture F1/FR1 de la couche de travail radialement la plus intérieure est inférieur à 1/3, dans lequel :

FR1 est la force rupture en extension uniaxiale des câbles de la couche de travail radialement la plus intérieure,

$$F1 = p_1 * Tc * [(\tan(|\alpha2|)/(\tan(|\alpha1|)+\tan(|\alpha2|))) / \cos^2(|\alpha1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel.

De préférence encore, le ratio d'utilisation du potentiel de rupture F1/FR1 de la couche de travail radialement la plus intérieure est au moins 30 % supérieur au ratio d'utilisation du potentiel de rupture F2/FR2 de la couche de travail radialement la plus extérieure.

Selon un mode de réalisation de l'invention, les éléments de renforcement des couches de sommet de travail sont des câbles métalliques inextensibles.

Selon un mode de réalisation avantageux de l'invention, les deux couches de sommet de travail et ladite au moins une couche d'éléments de renforcement circonférentiels sont seules présentes pour constituer l'armature de sommet sur au moins 60% de la largeur axiale de l'armature sommet et avantageusement encore sur au moins 80% de la largeur axiale de l'armature sommet. Ces modes de réalisations avantageux de l'invention vont dans le sens d'un allègement encore plus important du pneumatique.

Selon un mode de réalisation préféré de l'invention, optimisant l'amincissement du sommet du pneumatique, les deux couches de sommet de travail et ladite au moins une couche d'éléments de renforcement circonférentiels sont seules présentes pour constituer l'armature de sommet sur la totalité de la largeur axiale de l'armature sommet.

Selon une variante avantageuse de réalisation de l'invention, ladite au moins une couche d'éléments de renforcement circonférentiels présente une largeur axiale supérieure à 0.5xL.

Les largeurs axiales des couches d'éléments de renforcement sont mesurées sur une coupe transversale d'un pneumatique, le pneumatique étant donc dans un état non gonflé.

Selon une réalisation préférée de l'invention, les deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, ladite au moins une couche d'éléments de renforcement circonférentiels est radialement disposée entre deux couches de sommet de travail.

Selon ce mode de réalisation de l'invention, ladite au moins une couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à ladite au moins une couche d'éléments de renforcement circonférentiels sont supérieures à la largeur axiale de ladite au moins une couche d'éléments de renforcement circonférentiels et de préférence, lesdites couches de sommet de travail adjacentes à ladite au moins une couche d'éléments de renforcement circonférentiels sont de part et d'autre du plan équatorial et dans le prolongement axial immédiat de ladite au moins une couche d'éléments de renforcement circonférentiels couplées sur une largeur axiale, pour être ensuite découplées par une couche de mélange de caoutchouc au moins sur le restant de la largeur commune aux dites deux couches de travail.

Au sens de l'invention, des couches de sommet de travail sont dites couplées si les éléments de renforcement respectifs de chacune des couches sont séparés radialement d'une distance inférieure au diamètre moyen du cercle circonscrit aux éléments de renforcement, ladite épaisseur de caoutchouc étant mesurée radialement entre les génératrices respectivement radialement supérieure et inférieure desdits éléments de renforcement.

Le diamètre moyen du cercle circonscrit aux éléments de renforcement est défini comme étant le diamètre moyen des cercles circonscrits aux éléments de renforcement de chacune des couches de sommet de travail.

La présence de tels couplages entre les couches de sommet de travail adjacentes à ladite au moins une couche d'éléments de renforcement circonférentiels permettent la diminution des contraintes de tension agissant sur les éléments circonférentiels axialement le plus à l'extérieur et situé le plus près du couplage.

L'épaisseur des profilés de découplage entre les couches de sommet de travail, axialement extérieurs à la zone de couplage, mesurée au droit des extrémités de la nappe de travail la moins large, sera au moins égale à deux millimètres, et préférentiellement supérieure à 2,5 mm.

Selon un mode de réalisation avantageux de l'invention, les éléments de renforcement de ladite au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements de ladite au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formés d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Selon un mode de réalisation préféré de l'invention, les câbles de l'armature de carcasse présentent au test dit de perméabilité un débit inférieur à 10 cm$^3$/min et de préférence encore inférieur à 2 cm$^3$/min.

Selon un mode de réalisation avantageux de l'invention, les éléments de renforcement métalliques d'au moins une couche de l'armature de carcasse sont des câbles, de préférence non fretté, à au moins deux couches, au moins une couche interne étant gainée d'une couche constituée d'une composition de caoutchouc non réticulable, réticulable ou réticulée, de préférence à base d'au moins un élastomère diénique.

L'invention propose encore un pneumatique pour véhicule de type poids lourd, destiné à être monté sur une jante creuse de type 15° drop centre, à armature de carcasse radiale, constituée d'au moins une couche d'éléments de renforcement, ledit pneumatique comprenant une armature de sommet comprenant deux couches de sommet de travail d'éléments de renforcement croisés d'une couche à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels, l'armature de sommet étant coiffée radialement d'une bande de roulement, ladite bande de roulement étant réunie à deux bourrelets par l'intermédiaire de deux flancs, lesdites deux couches de sommet de travail et ladite au moins une couche d'éléments de renforcement circonférentiels étant seules présentes pour constituer l'armature de sommet sur au moins 40% de la largeur axiale de l'armature sommet, les éléments de renforcement de la couche de travail radialement la plus extérieure formant un angle $\alpha 2$ avec la direction circonférentielle supérieur en valeur absolue à l'angle $\alpha 1$ formé par les éléments de renforcement de la couche de travail radialement la plus intérieure avec la direction circonférentielle, la valeur absolue de la différence entre les valeurs absolues des angles $\alpha 2$ et $\alpha 1$ étant supérieure à 7°, l'angle moyen $\alpha$ satisfaisant la relation :

$$28+110*\exp(-L/100) < \alpha < 32+110*\exp(-L/100),$$

$\alpha$ étant défini par la relation $\text{Arctan}((\tan(|\alpha 1|)*\tan(|\alpha 2|))^{1/2})$, L étant la largeur maximum du pneumatique mesurée selon la direction axiale et exprimée en mm, et les éléments de renforcement métalliques d'au moins une couche de l'armature de carcasse étant des câbles, de préférence non fretté, à au moins deux couches, au moins une couche interne étant gainée d'une couche constituée d'une composition de caoutchouc non réticulable, réticulable ou réticulée, de préférence à base d'au moins un élastomère diénique.

Au sens de l'invention, des câbles métalliques à au moins deux couches, au moins une couche interne étant gainée d'une couche constituée d'une composition de caoutchouc non réticulable, réticulable ou réticulée présentent au test dit de perméabilité un débit quasi nul et donc inférieur à 20 cm3/min.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que lorsque la composition de caoutchouc de cette gaine est réticulable ou réticulée, elle comprend par définition un système de réticulation adapté pour permettre la réticulation de la composition lors de sa cuisson (i.e., son durcissement et non sa fusion) ; ainsi, cette composition de caoutchouc peut alors être qualifiée d'infusible, du fait qu'elle ne peut pas être fondue par chauffage à quelque température que ce soit.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement d'au moins une couche de l'armature de carcasse sont des câbles métalliques à couches de construction [L+M] ou [L+M+N], comportant une première couche C1 à L fils de diamètre $d_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant éventuellement entourée d'une couche externe C3 de N fils de diamètre $d_3$ enroulés ensemble en hélice selon un pas $p_3$ avec N allant de 8 à 20, une gaine constituée d'une composition de caoutchouc non réticulable, réticulable ou réticulée à base d'au moins un élastomère diénique, recouvrant, dans la construction [L+M], ladite première couche C1 et, dans la construction [L+M+N], au moins ladite couche C1 et/ou au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

D'une manière générale, lesdits câbles métalliques d'au moins une couche de l'armature de carcasse selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lesdits câbles métalliques d'au moins une couche de l'armature de carcasse selon l'invention pourront être obtenus selon différentes techniques connues de l'homme du métier, par exemple en deux étapes, tout d'abord par gainage via une tête d'extrusion de la couche C1 ou de l'âme ou structure intermédiaire L+M (couches C1+C2), étape suivie dans un deuxième temps d'une opération finale de câblage ou retordage des M+N fils des couches C2 et C3 autour de la couche C1 préalablement gainée ou des N fils de la couche C3 autour de la couche C2 préalablement gainée.

Selon d'autres variantes de réalisation de l'invention décalant le compromis de performance du pneumatique de façon moins favorable pour ce qui concerne l'allègement, l'armature de sommet comporte une couche supplémentaire, dite de protection, radialement extérieure aux couches de sommet de travail, de préférence centrée sur le plan médian circonférentiel. Les éléments de renforcements d'un telle couche de protection sont de préférence des éléments de renforcement dits élastiques, orientés par rapport à la direction circonférentielle avec un angle compris entre 8° et 45° et de même sens que l'angle formé par les éléments de renforcement de la couche de travail qui lui est radialement adjacente. De préférence encore, les éléments de renforcements d'une telle couche de protection sont parallèles aux éléments de renforcement de la couche de travail qui lui est radialement adjacente.

D'autres variantes peuvent encore prévoir que l'armature de sommet peut être complétée entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse. Avantageusement, ladite couche de triangulation est constituée de deux demi-couches positionnées axialement de part et d'autre du plan médian circonférentiel.

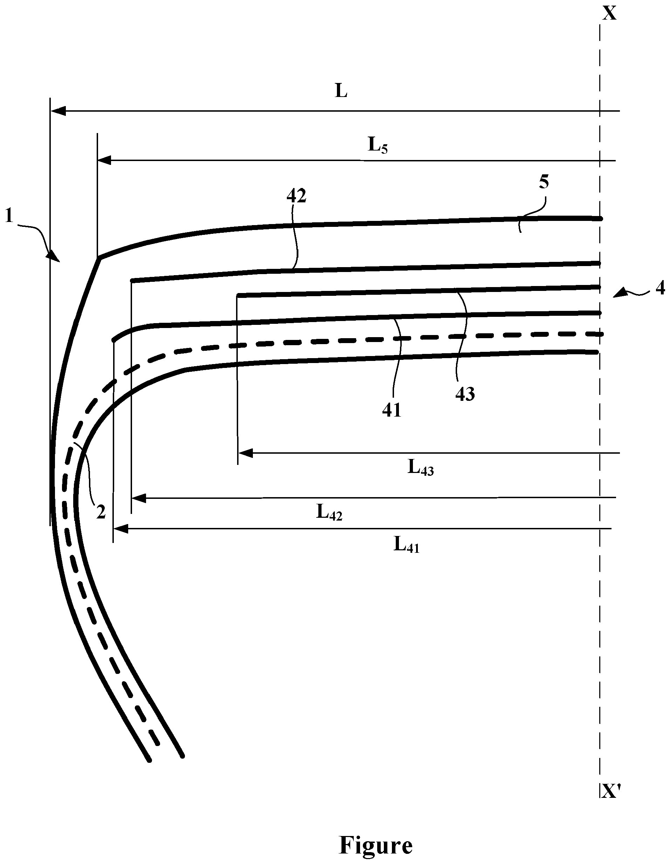

D'autres détails et caractéristiques avantageux de l'invention ressortiront ci-après de la description d'un exemple de réalisation de l'invention en référence à la figure qui représente une vue méridienne d'un schéma d'un pneumatique selon un mode de réalisation de l'invention.

La figure n'est pas représentée à l'échelle pour en simplifier la compréhension.

La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 385/65 R 22.5, comprend une armature de carcasse radiale 2 ancrée dans deux bourrelets, non représentés sur la figure. L'armature de carcasse 2 est formée d'une seule couche de câbles métalliques. Il comporte encore une bande de roulement 5.

Les éléments de renforcement de la couche d'armature de carcasse 2 sont des câbles à couche de structure 1+6+12, non fretté, constitué d'un noyau central formé d'un fil, d'une couche intermédiaire formée de six fils et d'une couche externe formée de douze fils.

Ils présentent les caractéristiques suivantes (d et p en mm) :

- structure 1+6+12 ;
- $d_1$ = 0.20 (mm);
- $d_2$ = 0.18 (mm);
- $p_2$ = 10 (mm)
- $d_3$ = 0.18 (mm);
- $p_3$ = 10 (mm),
- $(d_2/d_3)$=1;

avec $d_2$, $p_2$, respectivement le diamètre et le pas d'hélice de la couche intermédiaire et $d_3$ et $p_3$, respectivement le diamètre et le pas d'hélice des fils de la couche externe.

L'âme du câble constitué du noyau central formé d'un fil et de la couche intermédiaire formée de six fils est gainée par une composition de caoutchouc à base d'élastomère diénique non vulcanisé (à l'état cru). Le gainage est obtenu via une tête d'extrusion de l'âme, suivi d'une opération finale de retordage ou câblage des 12 fils formant la couche externe autour de l'âme ainsi gainée.

Le câble présente au test dit de perméabilité, tel que décrit précédemment un débit égal à 0 $cm^3$/min et donc inférieur à 2 $cm^3$/min. Sa pénétration par la composition de caoutchouc est supérieure à 98 %.

Le câble présente un diamètre égal à 0.95 mm.

La composition élastomérique constituant la gaine de caoutchouc est réalisée à partir d'une composition telle que décrite précédemment.

Sur la figure, l'armature de carcasse 2 est frettée conformément à l'invention par une armature de sommet 4, formée radialement de l'intérieur à l'extérieur :

- d'une première couche de travail 41 formée de câbles métalliques orientés d'un angle égal à 20°,

- d'une couche d'éléments de renforcement circonférentiels 43 formée de câbles métalliques en acier 21.28, de type "bi-module",

- d'une deuxième couche de travail 42 formée de câbles métalliques orientés d'un angle égal à 44°, croisés avec les câbles métalliques de la première couche de travail 41, les câbles de chacune des couches de travail 41, 42 étant orientés de part et d'autre de la direction circonférentielle.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2 mm.

Les câbles métalliques constituant les éléments de renforcement de la couche d'éléments de renforcement circonférentiels sont distants les uns des autres de 2.4 mm, selon la normale à la direction de la ligne moyenne des câbles.

Le pneumatique est gonflé à une pression de 9 bars.

La largeur axiale $L_{41}$ de la première couche de travail 41 est égale à 295 mm.

La largeur axiale $L_{42}$ de la deuxième couche de travail 42 est égale à 276 mm.

La largeur axiale $L_{43}$ de la couche d'éléments de renforcement circonférentiels 43 est égale à 200 mm.

La largeur axiale de la bande de roulement $L_5$ est égale à 309 mm.

La largeur axiale L est égale à 384 mm.

La masse cumulée des deux couches de travail 41, 42 et de la couche d'éléments de renforcement circonférentiels 43, comprenant la masse des câbles métalliques et des mélanges de calandrage, se monte ainsi à 13.1 Kg.

La différence entre les angles formés par les câbles de la première couche de sommet de travail avec la direction circonférentielle et ceux des câbles de la deuxième couche de sommet de travail est égale à 24°.

L'angle moyen est égal à 30.7° et est bien compris entre 30.4° et 34.4°.

La valeur mesurée de Re est égale à 533 mm.

La valeur mesurée de Es est égale à 20.3 mm.

La valeur moyenne RL des rayons mesurés est égale à 408 mm.

La valeur Rt déterminée sur le pneumatique est égale à 1145 mm.

La valeur calculée de Tc est égale à 389.7 N/mm.

La valeur calculée de $C_F$ est égale à 0.

La valeur de F1 est égale à 641.0 N.

La valeur de F2 est égale à 412.2 N.

Les forces ruptures des éléments de renforcement des couches de sommet de travail FR1 et FR2 sont égales à 2600 N.

Le ratio d'utilisation du potentiel de rupture F2/FR2 est égal à 15.9 %.

Le ratio d'utilisation du potentiel de rupture F1/FR1 est égal à 24.7 %.

Le ratio d'utilisation du potentiel de rupture F1/FR1 est 55 % supérieur au ratio d'utilisation du potentiel de rupture F2/FR2.

Un pneumatique I selon l'invention est comparé à un premier pneumatique de référence R1 de même dimension qui diffère du pneumatique selon l'invention I d'une part par la nature des éléments de renforcement de la couche d'armature de carcasse. Les éléments de renforcement de la couche d'armature de carcasse de ce premier pneumatique de référence R1 sont des câbles à couche de structure 1+6+12, non fretté, identiques à ceux du pneumatique I selon l'invention, l'âme de ceux-ci n'étant pas gainée par une composition de caoutchouc.

De tels câbles présentent au test dit de perméabilité, tel que décrit précédemment un débit égal à 40 cm$^3$/min. Sa pénétration par la composition de caoutchouc est égale à 66 %.

Le premier pneumatique de référence R1 diffère d'autre part du pneumatique selon l'invention I par son armature de sommet formée radialement de l'intérieur à l'extérieur :

- d'une première couche de travail 41 formée de câbles métalliques orientés d'un angle égal à 16°,

- d'une couche d'éléments de renforcement circonférentiels 43 formée de câbles métalliques en acier 21.28, de type "bi-module",

- d'une deuxième couche de travail 42 formée de câbles métalliques orientés d'un angle égal à 34°, croisés avec les câbles métalliques de la première couche de travail 41, les câbles de chacune des couches de travail 41, 42 étant orientés de part et d'autre de la direction circonférentielle.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2 mm.

Les câbles métalliques constituant les éléments de renforcement de la couche d'éléments de renforcement circonférentiels sont distants les uns des autres de 2.4 mm, selon la normale à la direction de la ligne moyenne des câbles.

Le pneumatique est gonflé à une pression de 9 bars.

La largeur axiale $L_{41}$ de la première couche de travail 41 est égale à 295 mm.

La largeur axiale $L_{42}$ de la deuxième couche de travail 42 est égale à 276 mm.

La largeur axiale $L_{43}$ de la couche d'éléments de renforcement circonférentiels 43 est égale à 200 mm.

La largeur axiale de la bande de roulement $L_5$ est égale à 309 mm.

La largeur axiale L est égale à 384 mm.

La masse cumulée des deux couches de travail 41, 42 et de la couche d'éléments de renforcement circonférentiels 43, comprenant la masse des câbles métalliques et des mélanges de calandrage, se monte ainsi à 13.1 Kg.

La différence entre les angles formés par les câbles de la première couche de sommet de travail avec la direction circonférentielle et ceux des câbles de la deuxième couche de sommet de travail est égale à 18°.

L'angle moyen est égal à 23.7°.

La valeur mesurée de Re est égale à 533 mm.

La valeur mesurée de Es est égale à 20.3 mm.

La valeur moyenne RL des rayons mesurés est égale à 408 mm.

La valeur Rt déterminée sur le pneumatique est égale à 1145 mm.

La valeur calculée de Tc est égale à 330.4 N/mm.

La valeur calculée de $C_F$ est égale à 0.

La valeur de F1 est égale à 591.8 N.

La valeur de F2 est égale à 338.2 N.

Les forces ruptures des éléments de renforcement des couches de sommet de travail FR1 et FR2 sont égales à 2600 N.

Le ratio d'utilisation du potentiel de rupture F2/FR2 est égal à 13.0 %.

Le ratio d'utilisation du potentiel de rupture F1/FR1 est égal à 22.8 %.

Le ratio d'utilisation du potentiel de rupture F1/FR1 est 75 % supérieur au ratio d'utilisation du potentiel de rupture F2/FR2.

Le pneumatique I selon l'invention est encore comparé à un deuxième pneumatique de référence R2 de même dimension qui diffère du premier pneumatique de référence R1 par son armature de sommet formée radialement de l'intérieur à l'extérieur :

- d'une première couche de travail formée de câbles métalliques orientés d'un angle égal à 18°, du même côté que les câbles de la couche de triangulation par rapport à la direction circonférentielle,

- d'une couche d'éléments de renforcement circonférentiels 43 formée de câbles métalliques en acier 21.28, de type "bi-module",

- d'une seconde couche de travail formée de câbles métalliques orientés d'un angle égal à 18° et croisés avec les câbles métalliques de la première couche de travail, les câbles de chacune des couches de travail étant orientés de part et d'autre de la direction circonférentielle,

- d'une couche de protection formées de câbles métalliques élastiques 6.35, dont la distance entre les éléments de renforcement, mesurée selon la normale à la direction de la ligne moyenne du câble est égal à 2.5 mm, orientés d'un angle égal à 18°, du même côté que les câbles de la seconde couche de travail.

Les câbles métalliques des deux couches de travail et de la couche de triangulation sont des câbles de formule 9.35. Ils sont répartis dans chacune des couches de travail avec une distance entre les éléments de renforcement, mesurée selon la normale à la direction de la ligne moyenne du câble égale à 2.5 mm.

Le pneumatique de référence est gonflé à une pression de 9 bars.

La largeur axiale de la couche triangulation est égale à 260 mm.

La largeur axiale de la première couche de travail est égale à 280 mm.

La largeur axiale de la deuxième couche de travail est égale à 260 mm.

La largeur axiale de la couche de protection est égale à 200 mm.

La masse cumulée des couches de travail, de la couche d'éléments de renforcement circonférentiels et de la couche de protection du pneumatique de référence R2, comprenant la masse des câbles métalliques et des mélanges de calandrage, se monte à 14 Kg.

La valeur absolue de la différence entre les valeurs absolues des angles formés par les câbles de la première couche de sommet de travail avec la direction circonférentielle et ceux des câbles de la deuxième couche de sommet de travail est nulle, les angles étant identiques, contrairement à l'invention.

L'angle moyen est égal à 18°.

La valeur de F1 est égale à 600 N.

La valeur de F2 est égale à 523 N.

Les valeurs F1 et F2 sont obtenues par une simulation éléments finis, le nombre élevés de nappes de renforcement dans le sommet ne permettant pas l'utilisation d'un modèle analytique simple.

Les forces ruptures des éléments de renforcement des couches de sommet de travail FR1 et FR2 sont égales à 2600 N.

Le ratio d'utilisation du potentiel de rupture F2/FR2 est égal à 20.1 %.

Le ratio d'utilisation du potentiel de rupture F1/FR1 est égal à 23.1 %.

Le ratio d'utilisation du potentiel de rupture F1/FR1 est 15 % supérieur au ratio d'utilisation du potentiel de rupture F2/FR2.

Des essais ont été réalisés avec des pneumatiques I réalisés selon l'invention et avec les pneumatiques R1 et R2 de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 3550 daN progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance de l'armature sommet à celles des pneumatiques de référence lors de roulage sur des sols bitumineux.

Des tests visant à caractériser la résistance à la rupture d'une armature de sommet de pneumatique soumise à des chocs ont également été réalisés. Ces tests consistent à faire rouler un pneumatique, gonflé à une pression recommandée et soumis à une charge recommandée, sur un obstacle ou indenteur cylindrique de diamètre égal à 1.5 pouce, soit 38.1 mm, et d'une hauteur déterminée. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet. Les valeurs expriment l'énergie nécessaire pour obtenir la rupture du bloc sommet. Les valeurs sont exprimées à partir d'une base 100 correspondant à la valeur mesurée pour le pneumatique de référence R2.

| | |
|---|---|
| Référence R2 | 100 |
| Référence R1 | 150 |
| Invention I | 176 |

Ces résultats montrent que malgré un allégement du pneumatique, notamment par une diminution de la masse de son armature sommet, l'énergie à rupture lors d'un choc sur la surface de la bande de roulement est significativement supérieure à celle du pneumatique de référence R2. La comparaison des résultats entre les pneumatiques selon l'invention et les pneumatiques de référence R1 mettent en évidence que l'énergie nécessaire pour obtenir la rupture du bloc sommet a pu être nettement augmentée sans mettre en défaut l'endurance de la couche d'armature de carcasse qui est pourtant plus sollicitée en termes de mise en compression des éléments de renforcement. Ces résultats montrent bien que la présence du mélange caoutchouteux au sein des éléments de renforcement leur confère un comportement en compression qui autorise un angle moyen $\alpha$ conforme à l'invention, qui est favorable aux performances d'endurance de l'armature sommet du pneumatique.

Un autre pneumatique I2, conforme à l'invention a également été testé. Ce pneumatique I2 diffère du pneumatique I par la nature des éléments de renforcement de la couche d'armature de carcasse. Les éléments de renforcement de la couche d'armature de carcasse de ce pneumatique I2 sont des câbles à couche de structure 1+6+11, non fretté, constitué d'un noyau central formé d'un fil, d'une couche intermédiaire formée de six fils et d'une couche externe formée de onze fils.

Ils présentent les caractéristiques suivantes (d et p en mm) :

- structure 1+6+11 ;
- $d_1$ = 0.20 (mm);
- $d_2$ = 0.175 (mm);
- $p_2$ = 7 (mm)
- $d_3$ = 0.175 (mm);
- $p_3$ = 10 (mm),
- $(d_2/d_3)$=1;

avec $d_2$, $p_2$, respectivement le diamètre et le pas d'hélice de la couche intermédiaire et $d_3$ et $p_3$, respectivement le diamètre et le pas d'hélice des fils de la couche externe.

L'âme du câble constitué du noyau central formé d'un fil et de la couche intermédiaire formée de six fils n'est pas gainée par une composition de caoutchouc.

De tels câbles présentent au test dit de perméabilité, tel que décrit précédemment un débit égal à 5 cm$^3$/min. Sa pénétration par la composition de caoutchouc est égale à 98 %.

Lors des tests visant à caractériser la résistance à la rupture de l'armature de sommet de pneumatique, la valeur d'énergie nécessaire pour obtenir la rupture du bloc sommet exprimée à partir d'une base 100 correspondant à la valeur mesurée pour le pneumatique de référence R2 est égale à 176.

## Revendications

1. Pneumatique (1) pour véhicule de type poids lourd, destiné à être monté sur une jante creuse, de type « 15° drop centre », à armature de carcasse radiale (2), constituée d'au moins une couche d'éléments de renforcement, ledit pneumatique comprenant une armature de sommet (4) comprenant deux couches de sommet de travail d'éléments (41, 42) de renforcement croisés d'une couche à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels (43), l'armature sommet (4) étant coiffée radialement d'une bande de roulement (5), ladite bande de roulement étant réunie à deux bourrelets par l'intermédiaire de deux flancs,

   - lesdites deux couches de sommet de travail (41, 42) et ladite au moins une couche d'éléments de renforcement circonférentiels (43) étant seules présentes pour constituer l'armature de sommet (4) sur au moins 40 % de la largeur axiale de l'armature sommet (4),
   - les éléments de renforcement de la couche de travail (42) radialement la plus extérieure formant un angle ($\alpha$2) avec la direction circonférentielle supérieur en valeur absolue à l'angle ($\alpha$1) formé par les éléments de renforcement de la couche de travail (41) radialement la plus intérieure avec la direction circonférentielle,
   - la valeur absolue de la différence entre les valeurs absolues des angles ($\alpha$2) et ($\alpha$1) étant supérieure à 7°,
   **caractérisé en ce que** l'angle moyen $\alpha$ satisfait la relation :

$$28+110*\exp(-L/100) < \alpha < 32+110*\exp(-L/100),$$

   $\alpha$ étant défini par la relation Arctan$((\tan(|\alpha1|)*\tan(|\alpha2|))^{1/2}$, L étant la largeur maximum du pneumatique mesurée selon la direction axiale et exprimée en mm,
   - **en ce que** les éléments de renforcement métalliques de ladite au moins une couche d'armature de carcasse sont des câbles présentant au test dit de perméabilité, décrit dans la norme ASTM D2692-98, un débit inférieur à 20 cm$^3$/min, et
   - **en ce qu'**un mélange caoutchouteux est présent au moins localement au sein de la structure desdits câbles.

2. Pneumatique (1) selon la revendication 1, **caractérisé en ce que** le ratio d'utilisation du potentiel de rupture F2/FR2 de la couche de travail radialement la plus extérieure est inférieur à 1/6, dans lequel :

   FR2 est la force rupture en extension uniaxiale des câbles de la couche de travail radialement la plus extérieure,

$$F2 = p_2 * Tc * [(\tan(|\alpha1|)/((\tan(|\alpha1|)+\tan(|\alpha2|))) / \cos^2(|\alpha2|) + C_F],$$

   avec

$$Tc = 0.092 * P * Rs* ( 1-(Rs^2-R_L^2)/(2*Rt*Rs) ),$$

   P : la pression de gonflage du pneumatique,

$$C_F = 0.00035*(\min((L-80) / \sin(|\alpha1|), (L-80) / \sin(|\alpha2|), 480)-480),$$

   $p_2$ : le pas de pose des éléments de renforcement de la couche de sommet de travail radialement la plus extérieure, mesuré perpendiculairement aux éléments de renforcement au niveau du médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus à l'intérieure,

RL : moyenne des rayons des points axialement les plus à l'extérieur de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement.

3. Pneumatique (1) selon la revendication 1 ou 2, **caractérisé en ce que** les éléments de renforcement desdites deux couches de sommet de travail (41, 42) sont métalliques.

4. Pneumatique (1) selon la revendication 1 ou 2, **caractérisé en ce que** la valeur absolue de la différence entre les valeurs absolues des angles $\alpha2$ et $\alpha1$ est supérieure ou égal à 10°, et de préférence supérieur à 14°.

5. Pneumatique (1) selon l'une des revendications 1 à 4, **caractérisé en ce que** le ratio d'utilisation du potentiel de rupture F2/FR2 de la couche de travail (42) radialement la plus extérieure est inférieur à 1/8.

6. Pneumatique (1) selon l'une des revendications 1 à 5, **caractérisé en ce que** le ratio d'utilisation du potentiel de rupture F1/FR1 de la couche de travail (41) radialement la plus intérieure est inférieur à 1/3, dans lequel :

FR1 est la force rupture en extension uniaxiale des câbles de la couche de travail radialement la plus intérieure,

$$F1 = p_1 * Tc * [(\tan(|\alpha2|)/((\tan(|\alpha1|)+\tan(|\alpha2|))) / \cos^2(|\alpha1|) + C_F],$$

avec

$$Tc = 0.092 * P * Rs* ( 1-(Rs^2-R_L^2)/(2*Rt*Rs) ),$$

P : la pression de gonflage du pneumatique,

$$C_F = 0.00035*(\min((L-80) / \sin(|\alpha1|), (L-80) / \sin(|\alpha2|), 480)-480),$$

$p_1$ : le pas de pose des éléments de renforcement de la couche de sommet de travail radialement la plus intérieure, mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus à l'intérieure,

RL : moyenne des rayons des points axialement les plus à l'extérieur de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement.

**7.** Pneumatique (1) selon la revendication 6, **caractérisé en ce que** le ratio d'utilisation du potentiel de rupture F1/FR1 de la couche de travail (41) radialement la plus intérieure est au moins 30 % supérieur au ratio d'utilisation du potentiel de rupture F2/FR2 de la couche de travail (42) radialement la plus extérieure.

**8.** Pneumatique (1) selon l'une des revendications précédentes, **caractérisé en ce que** les deux couches de sommet de travail (41, 42) et ladite au moins une couche d'éléments de renforcement circonférentiels (43) sont seules présentes pour constituer l'armature de sommet sur la totalité de la largeur axiale de l'armature sommet (4).

**9.** Pneumatique (1) selon l'une des revendications précédentes, **caractérisé en ce que** les éléments de renforcement métalliques de ladite au moins une couche d'armature de carcasse (2) présentant au test dit de perméabilité, décrit dans la norme ASTM D2692-98, un débit inférieur à 20 cm$^3$/min sont des câbles à au moins deux couches et **en ce qu'**au moins une couche interne est gainée d'une couche constituée d'une composition polymérique telle qu'une composition de caoutchouc non réticulable, réticulable ou réticulée, de préférence à base d'au moins un élastomère diénique.

**10.** Pneumatique (1) selon l'une des revendications précédentes, **caractérisé en ce que** lesdits câbles métalliques d'au moins une couche de l'armature de carcasse (2) présentent au test dit de perméabilité, décrit dans la norme ASTM D2692-98, un débit inférieur à 10 cm$^3$/min et de préférence encore inférieur à 2 cm$^3$/min.

**11.** Pneumatique (1) pour véhicule de type poids lourd, destiné à être monté sur une jante creuse, de type « 15° drop centre », à armature de carcasse radiale (2), constituée d'au moins une couche d'éléments de renforcement, ledit pneumatique comprenant une armature de sommet (4) comprenant deux couches de sommet de travail d'éléments (41, 42) de renforcement croisés d'une couche à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels (43), l'armature sommet (4) étant coiffée radialement d'une bande de roulement (5), ladite bande de roulement étant réunie à deux bourrelets par l'intermédiaire de deux flancs,

- lesdites deux couches de sommet de travail (41, 42) et ladite au moins une couche d'éléments de renforcement circonférentiels (43) étant seules présentes pour constituer l'armature de sommet (4) sur au moins 40 % de la largeur axiale de l'armature sommet (4),
- les éléments de renforcement de la couche de travail (42) radialement la plus extérieure formant un angle ($\alpha$2) avec la direction circonférentielle supérieur en valeur absolue à l'angle ($\alpha$1) formé par les éléments de renforcement de la couche de travail (41) radialement la plus intérieure avec la direction circonférentielle,
- la valeur absolue de la différence entre les valeurs absolues des angles ($\alpha$2) et ($\alpha$1) étant supérieure à 7°, caractérisé - **en ce que** l'angle moyen $\alpha$ satisfait la relation :

$$28+110*\exp(-L/100) < \alpha < 32+110*\exp(-L/100),$$

$\alpha$ étant défini par la relation Arctan((tan($|\alpha1|$)*tan($|\alpha2|$))$^{1/2}$), L étant la largeur maximum du pneumatique mesurée selon la direction axiale et exprimée en mm, et
- **en ce que** les éléments de renforcement métalliques de ladite au moins une couche d'armature de carcasse sont des câbles à au moins deux couches, au moins une couche interne étant gainée d'une couche constituée d'une composition polymérique telle qu'une composition de caoutchouc non réticulable, réticulable ou réticulée, de préférence à base d'au moins un élastomère diénique.

**12.** Pneumatique selon l'une des revendications précédentes, **caractérisé en ce que** lesdits éléments de renforcement de ladite au moins une couche de l'armature de carcasse sont des câbles métalliques à couches de construction [L+M] ou [L+M+N], comportant une première couche C1 à L fils de diamètre $d_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant éventuellement entourée d'une couche externe C3 de N fils de diamètre $d_3$ enroulés ensemble en hélice selon un pas $p_3$ avec N allant de 8 à 20, et **en ce qu'**une gaine constituée d'une composition de caoutchouc non réticulable, réticulable ou réticulée à base d'au moins un élastomère diénique, recouvre, dans la construction [L+M], ladite première couche C1 et, dans la construction [L+M+N], au moins ladite couche C1 et/ou au moins ladite couche C2.

**Patentansprüche**

1. Reifen (1) für ein Schwerlastfahrzeug zur Montage auf einer Tiefbettfelge vom Typ "15°-Drop-Center" mit radialer Karkassenbewehrung (2), die von wenigstens einer Schicht aus Verstärkungselementen gebildet ist, wobei der Reifen eine Scheitelbewehrung (4) umfasst, die zwei Arbeitsscheitelschichten aus Verstärkungselementen (41, 42) umfasst, die von einer Schicht zur anderen gekreuzt sind, wobei sie mit der Umfangsrichtung Winkel ($\alpha$1, $\alpha$2) größer als 8° bilden, wobei die Winkel $\alpha$1 und $\alpha$2 beiderseits der Umfangsrichtung ausgerichtet sind, und wenigstens einer Schicht aus Umfangsverstärkungselementen (43), wobei die Scheitelbewehrung (4) radial von einem Laufstreifen (5) bedeckt ist, wobei der Laufstreifen über zwei Flanken mit zwei Wülsten verbunden ist,

   - wobei die zwei Arbeitsscheitelschichten (41, 42) und die wenigstens eine Schicht aus Umfangsverstärkungselementen (43) allein dafür vorhanden sind, die Scheitelbewehrung (4) auf wenigstens 40 % der axialen Breite der Scheitelbewehrung (4) zu bilden,
   - wobei die Verstärkungselemente der radial äußersten Arbeitsschicht (42) einen Winkel ($\alpha$2) zur Umfangsrichtung bilden, der im Absolutwert größer als der Winkel ($\alpha$1) ist, der von den Verstärkungselementen der radial innersten Arbeitsschicht (41) zur Umfangsrichtung gebildet wird,
   - wobei der Absolutwert der Differenz zwischen den Absolutwerten der Winkel ($\alpha$2) und ($\alpha$1) größer als 7° ist, **dadurch gekennzeichnet, dass** der mittlere Winkel $\alpha$ die folgende Beziehung erfüllt:

   $$28+110*\exp(-L/100) < \alpha < 32+110*\exp(-L/100),$$

   wobei $\alpha$ durch die Beziehung Arctan$((\tan(|\alpha1|)*\tan(|\alpha2|))^{1/2})$ definiert ist, wobei L die maximale Breite des Reifens ist, die in der Axialrichtung gemessen und in mm ausgedrückt wird,
   - dadurch, dass die metallischen Verstärkungselemente der wenigstens einen Karkassenbewehrungsschicht Seile sind, die bei der Durchlässigkeitsprüfung, die in der Norm ASTM D2692-98 beschrieben ist, einen Durchsatz unter 20 cm$^3$/min aufweisen, und
   - dadurch, dass eine Kautschukmischung wenigstens lokal im Inneren der Struktur der Seile vorhanden ist.

2. Reifen (1) nach Anspruch 1, **dadurch gekennzeichnet, dass** der Ausschöpfungsgrad des Bruchpotentials F2/FR2 der radial äußersten Arbeitsschicht kleiner als 1/6 ist, wobei:

   FR2 die Bruchkraft bei uniaxialer Dehnung der Seile der radial äußersten Arbeitsschicht ist,

   $$F2 = p_2 * Tc * [(\tan(|\alpha1|)/((\tan(|\alpha1|)+\tan(|\alpha2|))) / \cos^2(|\alpha2|) + C_f],$$

   wobei

   $$Tc = 0.092 * P * Rs* (1-(Rs^2-RL^2)/(2*Rt*Rs)),$$

   P: der Aufblasdruck des Reifens,

   $$C_F = 0.00035*(\min((L-80) / \sin(|\alpha1|), (L-80) / \sin(|\alpha2|), 480)-480),$$

   $p_2$: der Legeabstand der Verstärkungselemente der radial äußersten Arbeitsscheitelschicht, der senkrecht zu den Verstärkungselementen am Umfangsmittel gemessen wird,

   $$Rs = Re - Es,$$

   Re: Außenradius des Reifens, der am radial äußersten Punkt auf der Oberfläche des Laufstreifens des Reifens gemessen wird, wobei die Fläche extrapoliert wird, um eventuelle Hohlräume zu füllen,
   Es: radialer Abstand zwischen dem radial äußersten Punkt des Reifens und seiner Orthogonalprojektion auf der radial äußeren Fläche eines Verstärkungselements der radial innersten Arbeitsscheitelschicht,
RL: Durchschnitt der Radien der axial äußersten Punkte auf jeder Seite des Reifens,
Rt: der Radius des Kreises, der durch drei Punkte verläuft, die sich auf der Außenfläche des Laufstreifens außerhalb der Hohlräume befinden, die anhand eines Schulterendes in jeweiligen axialen Abständen definiert sind, die gleich 1/4, 1/2 und 3/4 der Breite des Laufstreifens sind.

3. Reifen (1) nach Anspruch 1 oder 2, **dadurch gekennzeichnet, dass** die Verstärkungselemente der zwei Arbeitsscheitelschichten (41, 42) metallisch sind.

4. Reifen (1) nach Anspruch 1 oder 2, **dadurch gekennzeichnet, dass** der Absolutwert der Differenz zwischen den Absolutwerten der Winkel $\alpha2$ und $\alpha1$ größer als oder gleich 10° und vorzugsweise größer als 14° ist.

5. Reifen (1) nach einem der Ansprüche 1 bis 4, **dadurch gekennzeichnet, dass** der Ausschöpfungsgrad des Bruchpotentials F2/FR2 der radial äußersten Arbeitsschicht (42) kleiner als 1/8 ist.

6. Reifen (1) nach einem der Ansprüche 1 bis 5, **dadurch gekennzeichnet, dass** der Ausschöpfungsgrad des Bruchpotentials F1/FR1 der radial innersten Arbeitsschicht (41) kleiner als 1/3 ist, wobei:

FR1 die Bruchkraft bei uniaxialer Dehnung der Seile der radial innersten Arbeitsschicht ist,

$$F1 = p_1 * Tc * [(\tan(|\alpha2|)/((\tan(|\alpha1|)+\tan(|\alpha2|))) / \cos^2(|\alpha1|) + C_F],$$

wobei

$$Tc = 0.092 * P * Rs* ( 1-(Rs^2-RL^2)/(2*Rt*Rs) ),$$

P: der Aufblasdruck des Reifens,

$$C_F = 0.00035*(\min((L-80) / \sin(|\alpha1|), (L-80) / \sin(|\alpha2|), 480)-480),$$

$p_1$: der Legeabstand der Verstärkungselemente der radial innersten Arbeitsscheitelschicht, der senkrecht zu den Verstärkungselementen an der Umfangsmittelebene gemessen wird,

$$Rs = Re - Es,$$

Re: Außenradius des Reifens, der am radial äußersten Punkt auf der Oberfläche des Laufstreifens des Reifens gemessen wird, wobei die Fläche extrapoliert wird, um eventuelle Hohlräume zu füllen,
Es: radialer Abstand zwischen dem radial äußersten Punkt des Reifens und seiner Orthogonalprojektion auf der radial äußeren Fläche eines Verstärkungselements der radial innersten Arbeitsscheitelschicht,
RL: Durchschnitt der Radien der axial äußersten Punkte auf jeder Seite des Reifens,
Rt: der Radius des Kreises, der durch drei Punkte verläuft, die sich auf der Außenfläche des Laufstreifens außerhalb der Hohlräume befinden, die anhand eines Schulterendes in jeweiligen axialen Abständen definiert sind, die gleich 1/4, 1/2 und 3/4 der Breite des Laufstreifens sind.

7. Reifen (1) nach Anspruch 6, **dadurch gekennzeichnet, dass** der Ausschöpfungsgrad des Bruchpotentials F1/FR1 der radial innersten Arbeitsschicht (41) wenigstens 30 % über dem Ausschöpfungsgrad des Bruchpotentials F2/FR2 der radial äußersten Arbeitsschicht (42) liegt.

8. Reifen (1) nach einem der vorhergehenden Ansprüche, **dadurch gekennzeichnet, dass** die zwei Arbeitsscheitelschichten (41, 42) und die wenigstens eine Schicht aus Umfangsverstärkungselementen (43) allein dafür vorhanden sind, die Scheitelbewehrung über die gesamte axiale Breite der Scheitelbewehrung (4) zu bilden.

**9.** Reifen (1) nach einem der vorhergehenden Ansprüche, **dadurch gekennzeichnet, dass** die metallischen Verstärkungselemente der wenigstens einen Karkassenbewehrungsschicht (2), die bei der Durchlässigkeitsprüfung, die in der Norm ASTM D2692-98 beschrieben ist, einen Durchsatz unter 20 cm$^3$/min aufweisen, Seile mit wenigstens zwei Schichten sind, und dadurch, dass wenigstens eine Innenschicht mit einer Schicht umhüllt ist, die von einer Polymerzusammensetzung wie einer nicht vernetzbaren, vernetzbaren oder vernetzten Kautschukzusammensetzung, vorzugsweise auf Basis von wenigstens einem Dienelastomer, gebildet ist.

**10.** Reifen (1) nach einem der vorhergehenden Ansprüche, **dadurch gekennzeichnet, dass** die Metallseile wenigstens einer Schicht der Karkassenbewehrung (2) bei der Durchlässigkeitsprüfung, die in der Norm ASTM D2692-98 beschrieben ist, einen Durchsatz unter 10 cm$^3$/min und besser noch unter 2 cm$^3$/min aufweisen.

**11.** Reifen (1) für ein Schwerlastfahrzeug zur Montage auf einer Tiefbettfelge vom Typ "15°-Drop-Center" mit radialer Karkassenbewehrung (2), die von wenigstens einer Schicht aus Verstärkungselementen gebildet ist, wobei der Reifen eine Scheitelbewehrung (4) umfasst, die zwei Arbeitsscheitelschichten aus Verstärkungselementen (41, 42) umfasst, die von einer Schicht zur anderen gekreuzt sind, wobei sie mit der Umfangsrichtung Winkel ($\alpha$1, $\alpha$2) größer als 8° bilden, wobei die Winkel $\alpha$1 und $\alpha$2 beiderseits der Umfangsrichtung ausgerichtet sind, und wenigstens einer Schicht aus Umfangsverstärkungselementen (43), wobei die Scheitelbewehrung (4) radial von einem Laufstreifen (5) bedeckt ist, wobei der Laufstreifen über zwei Flanken mit zwei Wülsten verbunden ist,

- wobei die zwei Arbeitsscheitelschichten (41, 42) und die wenigstens eine Schicht aus Umfangsverstärkungselementen (43) allein dafür vorhanden sind, die Scheitelbewehrung (4) auf wenigstens 40 % der axialen Breite der Scheitelbewehrung (4) zu bilden,
- wobei die Verstärkungselemente der radial äußersten Arbeitsschicht (42) einen Winkel ($\alpha$2) zur Umfangsrichtung bilden, der im Absolutwert größer als der Winkel ($\alpha$1) ist, der von den Verstärkungselementen der radial innersten Arbeitsschicht (41) zur Umfangsrichtung gebildet wird,
- wobei der Absolutwert der Differenz zwischen den Absolutwerten der Winkel ($\alpha$2) und ($\alpha$1) größer als 7° ist, **dadurch gekennzeichnet, dass** der mittlere Winkel $\alpha$ die folgende Beziehung erfüllt:

$$28+110*exp(-L/100) < \alpha < 32+110*exp(-L/100),$$

wobei $\alpha$ durch die Beziehung Arctan$((tan(|\alpha 1|) *tan(|\alpha 2|))^{1/2})$ definiert ist, wobei L die maximale Breite des Reifens ist, die in der Axialrichtung gemessen und in mm ausgedrückt wird, und
- dadurch, dass die metallischen Verstärkungselemente der wenigstens einen Karkassenbewehrungsschicht Seile mit wenigstens zwei Schichten sind, wobei wenigstens eine Innenschicht mit einer Schicht umhüllt ist, die von einer Polymerzusammensetzung wie etwa einer nicht vernetzbaren, vernetzbaren oder vernetzten Kautschukzusammensetzung, vorzugsweise auf Basis von wenigstens einem Dienelastomer gebildet ist.

**12.** Reifen nach einem der vorhergehenden Ansprüche, **dadurch gekennzeichnet, dass** die Verstärkungselemente der wenigstens einen Schicht der Karkassenarmierung Metallseile mit Schichten mit einem Aufbau [L+M] oder [L+M+N] sind, die eine erste Schicht C1 mit L Drähten eines Durchmessers d$_1$ aufweisen, wobei L von 1 bis 4 beträgt, die von wenigstens einer Zwischenschicht C2 mit M Drähten eines Durchmessers d$_2$ umgeben ist, die zusammen entsprechend einer Steigung p$_2$ spiralförmig gewickelt sind, wobei M von 3 bis 12 beträgt, wobei die Schicht C2 eventuell von einer Außenschicht C3 aus N Drähten eines Durchmessers d$_3$ umgeben ist, die zusammen entsprechend einer Steigung p$_3$ spiralförmig gewickelt sind, wobei N von 8 bis 20 beträgt, und dadurch, dass eine Umhüllung, die von einer nicht vernetzbaren, vernetzbaren oder vernetzten Kautschukzusammensetzung auf der Basis von wenigstens einem Dienelastomer gebildet ist, in dem Aufbau [L+M] die erste Schicht C1 und in dem Aufbau [L+M+N] wenigstens die Schicht C1 und/oder wenigstens die Schicht C2 bedeckt.

**Claims**

**1.** Tyre (1) for a heavy duty vehicle, intended to be mounted on a drop-centre rim of the " 15° drop-centre type", with a radial carcass reinforcement (2) made up of at least one layer of reinforcing elements, said tyre comprising a crown reinforcement (4) comprising two working crown layers of reinforcing elements (41, 42) that are crossed from one layer to the next and make angles ($\alpha$1, $\alpha$2) of greater than 8° with the circumferential direction, said angles $\alpha$1 and $\alpha$2 being oriented on either side of the circumferential direction, and at least one layer of circumferential reinforcing elements (43), the crown reinforcement (4) being capped radially by a tread (5), said tread being connected to two beads by two sidewalls,

- said two working crown layers (41, 42) and said at least one layer of circumferential reinforcing elements (43) being the only ones present to form the crown reinforcement (4) over at least 40% of the axial width of the crown reinforcement (4),
- the reinforcing elements of the radially outermost working layer (42) forming an angle ($\alpha$2) with the circumferential direction that is greater in terms of absolute value than the angle ($\alpha$1) formed by the reinforcing elements of the radially innermost working layer (41) with the circumferential direction,
- the absolute value of the difference between the absolute values of the angles ($\alpha$2) and ($\alpha$1) eing greater than 7°,
- **characterized in that** the mean angle $\alpha$ satisfies the relationship:

$$28+110*\exp(-L/100) < \alpha < 32+110*\exp(-L/100),$$

$\alpha$ being defined by the relationship $\text{Arctan}((\tan(|\alpha 1|)*\tan(|\alpha 2|))^{1/2})$, L being the maximum width of the tyre measured in the axial direction and expressed in mm,
- **in that** the metal reinforcing elements of said at least one layer of the carcass reinforcement are cords that have a flow rate less than 20 cm$^3$/min in what is referred to as the permeability test described in the standard ASTM D2692-98, and
- **in that** a rubber compound is present least locally within the structure of said cords.

2. Tyre (1) according to Claim 1, **characterized in that** the rupture potential index F2/FR2 of the radially outermost working layer is less than 1/6, wherein:

FR2 is the breaking force in uniaxial extension of the cords of the radially outermost working layer,

$$F2 = p_2 * Tc * [(\tan(|\alpha 1|)/((\tan(|\alpha 1|)+\tan(|\alpha 2|))) / \cos^2(|\alpha 2|) + C_F],$$

where

$$Tc = 0.092 * P * Rs * (1-(Rs^2-R_L^2)/(2*Rt*Rs)),$$

P is the tyre inflation pressure,

$$C_F = 0.00035*(\min((L-80) / \sin(|\alpha 1|), (L-80) / \sin(|\alpha 2|), 480)-480),$$

$p_2$ is the pitch at which the reinforcing elements of the radially outermost working crown layer are laid, measured perpendicularly to the reinforcing elements at the circumferential median,

$$Rs = Re - Es,$$

Re is the external radius of the tyre, measured at the radially outermost point on the tread surface of the tyre, said surface being extrapolated in order to fill any voids there might be,
Es is the radial distance between the radially outermost point of the tyre and the orthogonal projection thereof onto the radially exterior face of a reinforcing element of the radially innermost working crown layer,
RL is the mean of the radii of the axially outermost points on each side of the tyre,
Rt is the radius of the circle passing through three points situated on the outer surface of the tread outside of the voids, defined from a shoulder end at respective axial distances equal to ¼, ½ and ¾ of the width of the tread.

3. Tyre (1) according to Claim 1 or 2, **characterized in that** the reinforcing elements of said two working crown layers (41, 42) are made of metal.

4. Tyre (1) according to Claim 1 or 2, **characterized in that** the absolute value of the difference between the absolute values of the angles $\alpha$2 and $\alpha$1 is greater than or equal to 10°, and preferably greater than 14°.

5. Tyre (1) according to one of Claims 1 to 4, **characterized in that** the rupture potential index F2/FR2 of the radially outermost working layer (42) is less than 1/8.

6. Tyre (1) according to one of Claims 1 to 5, **characterized in that** the rupture potential index F1/FR1 of the radially innermost working layer (41) is less than 1/3, wherein:

FR1 is the breaking force in uniaxial extension of the cords of the radially innermost working layer,

$$F1 = p_1 * Tc * [(\tan(|\alpha2|)/((\tan(|\alpha1|)+\tan(|\alpha2|))) / \cos^2(|\alpha1|) + C_F],$$

where

$$Tc = 0.092 * P * Rs * (1-(Rs^2-R_L^2)/(2*Rt*Rs)),$$

P is the tyre inflation pressure,

$$C_F = 0.00035*(\min((L-80) / \sin(|\alpha1|), (L-80) / \sin(|\alpha2|), 480)-480),$$

$p_1$ is the pitch at which the reinforcing elements of the radially innermost working crown layer are laid, measured perpendicularly to the reinforcing elements at the circumferential median plane.

7. Tyre (1) according to Claim 6, **characterized in that** the rupture potential index F1/FR1 of the radially innermost working layer (41) is at least 30% higher than the rupture potential index F2/FR2 of the radially outermost working layer (42).

8. Tyre (1) according to one of the preceding claims, **characterized in that** the two working crown layers (41, 42) and said at least one layer of circumferential reinforcing elements (43) are the only ones present to form the crown reinforcement over the entirety of the axial width of the crown reinforcement (4).

9. Tyre (1) according to one of the preceding claims, **characterized in that** the metal reinforcing elements of said at least one layer of the carcass reinforcement (2) that, in the test referred to as the permeability test described in the standard ASTM D2692-98, yield a flow rate of less than 20 cm³/min, are cords comprising at least two layers, and **in that** at least one inner layer is sheathed with a layer consisting of a polymer composition, such as a non-crosslinkable, crosslinkable or crosslinked rubber composition, preferably based on at least one diene elastomer.

10. Tyre (1) according to one of the preceding claims, **characterized in that** said metal cords of at least one layer of the carcass reinforcement (2), in the test referred to as the permeability test described in the standard ASTM D2692-98, yield a flow rate of less than 10 cm³/min and more preferably of less than 2 cm³/min.

11. Tyre (1) for a heavy duty vehicle, intended to be mounted on a drop-centre rim of the "15° drop-centre type", with a radial carcass reinforcement (2) made up of at least one layer of reinforcing elements, said tyre comprising a crown reinforcement (4) comprising two working crown layers of reinforcing elements (41, 42) that are crossed from one layer to the next and make angles (α1, α2) of greater than 8° with the circumferential direction, said angles α1 and α2 being oriented on either side of the circumferential direction, and at least one layer of circumferential reinforcing elements (43), the crown reinforcement (4) being capped radially by a tread (5), said tread being connected to two beads by two sidewalls,

- said two working crown layers (41, 42) and said at least one layer of circumferential reinforcing elements (43) being the only ones present to form the crown reinforcement (4) over at least 40% of the axial width of the crown reinforcement (4),
- the reinforcing elements of the radially outermost working layer (42) form an angle (α2) with the circumferential direction that being greater in terms of absolute value than the angle (α1) formed by the reinforcing elements of the radially innermost working layer (41) with the circumferential direction,
- the absolute value of the difference between the absolute values of the angles (α2) and (α1) being greater than 7°,

- **characterized in that** the mean angle $\alpha$ satisfies the relationship:

$$28+110*\exp(-L/100) < \alpha < 32+110*\exp(-L/100),$$

$\alpha$ being defined by the relationship Arctan$((\tan(|\alpha 1|)*\tan(|\alpha 2|))^{1/2})$, L being the maximum width of the tyre measured in the axial direction and expressed in mm, and
- **in that** the metal reinforcing elements of said at least one layer of carcass reinforcement are cords comprising at least two layers, at least one inner layer being sheathed with a layer consisting of a polymer composition, such as a non-crosslinkable, crosslinkable or crosslinked rubber composition, preferably based on at least one diene elastomer.

12. Tyre according to one of the preceding claims, **characterized in that** said reinforcing elements of said at least one layer of carcass reinforcement are layered metal cords of [L+M] or [L+M+N] construction, comprising a first layer C1 having L threads of diameter $d_1$ with L ranging from 1 to 4, surrounded by at least one intermediate layer C2 having M threads of diameter $d_2$ wound together in a helix at a pitch $p_2$ with M ranging from 3 to 12, said layer C2 possibly being surrounded by an outer layer C3 of N threads of diameter $d_3$ wound together in a helix at a pitch $p_3$ with N ranging from 8 to 20, and **in that** a sheath composed of a non-crosslinkable, crosslinkable or crosslinked rubber composition based on at least one diene elastomer covers said first layer C1 in the [L+M] construction and covers at least said layer C 1 and/or at least said layer C2 in the [L+M+N] construction.

**Figure**

## RÉFÉRENCES CITÉES DANS LA DESCRIPTION

**Documents brevets cités dans la description**

- FR 2728510
- WO 9924269 A
- WO 2017149223 A